# EUROPEAN PATENT APPLICATION

(11) **EP 4 465 215 A1**
(43) Date of publication of application: **20.11.2024**
(21) Application number: 23715000.8
(22) Date of filing: 30.03.2023
(51) Int. Cl.: G06Q 10/00, G06Q 30/08, G01G 19/40, G06Q 20/32, G06K 7/10, G08B 21/18, G06Q 10/083

(54) **SERVER, METHOD, AND SYSTEM FOR PROVIDING WASTE OIL MANAGEMENT SERVICE AND WASTE OIL TRANSACTION MATCHING SERVICE**

(30) Priority: 29.03.2023 KR 20230041107
(71) Applicant: Allsu Inc., Bucheon-si Gyeonggi-do 14786 (KR)
(72) Inventor: KIM, Ki Ok, Bucheon-si, Gyeonggi-do 14786 (KR)
(74) Representative: Murgitroyd & Company
(86) International application number: PCT/KR2023/004244
(87) International publication number: WO 2024/204887

(57) **Abstract**

According to an embodiment of the present disclosure, a waste oil management and transaction matching method of a system comprising as follows is disclosed: after information for authenticating the provider is input through the application executed on the first terminal device, based on recognizing a radio-frequency identification (RFID) tag of the specific waste oil collection device by the first terminal device, opening, by the waste oil collection device, a cover of an outlet of the waste oil collection device; measuring, by the specific waste oil collection device, a weight of waste oil supplied by the provider through the outlet of the specific waste oil collection device, and transmitting the measured weight to the server and the first terminal device; identifying, by the server, a specific collector that satisfies a transaction condition corresponding to waste oil sales information registered by the provider among a plurality of pre-registered collectors, and transmitting bid price information of the specific collector to the first terminal device; and transmitting, by the server, a message requesting collection of the waste oil supplied by the provider to a second terminal device used by the specific collector, based on the provider accepting waste oil purchase bid price information of the specific collector.

## Description

### [Technical Field]

The present disclosure relates to waste oil management and transaction matching technology, and more particularly, to a server, method, and system for providing a platform-based waste oil management service and a waste oil transaction matching service between a provider and a collector in a non-face-to-face manner.

### [Background Art]

In general, in modern society, waste oil is an environmental pollutant that is generated in large quantities in a wide range of industries. For example, cooking oil, which is mainly used for cooking, such as frying food materials in various industrial and commercial fields as well as at home, is transformed into waste oil contaminated by mixing of oil of other ingredients, impurities, or the like flowing out of food materials while repeatedly going through a cooking process several times. Such transformed waste oil needs to be replaced with new cooking oil. The necessity of recycling the waste oil generated at this time is required.

It is known that about 200,000 tons of waste oil are generated annually. However, there are many problems such as water pollution, sewage treatment cost, and analog collection system, but there is no clear solution.

Since Korea shows the highest level of greenhouse gas emissions among OECD countries, the government is expanding support and enacting laws based on the Green New Deal and Green Growth. However, it is expected that it will take a lot of time before the immediate problems in the field related to waste oil are improved.

The waste oil is recycled as biodiesel among recycled resources and is a resource of great environmental and economic value. However, a large amount of waste oil is still thrown away every day from emission sources including various sales offices, homes, government offices, and factories due to the inconvenient conventional system, lack of information on recycling waste oil, and lack of awareness of a value of recycling of waste oil, etc.

In addition, an emission source that has a relationship with a company that operates a waste oil collection service may directly call a collector through inquiry, acquaintance inquiry, search, etc., faces the collector to receive a schedule and amount, or is using an unreliable analog system that is unilaterally notified of a significant amount after collection and may not know the exact market price.

Therefore, although the demand for services for solving the above-mentioned problems and a server, method, and system for providing the services is increasing, concrete and effective means for solving these problems are not presented at all.

### [Related Art Document]

### [Patent Document]

Korean Patent Publication No. 10-1499153 (2015. 02. 27)

### [Disclosure]

### [Technical Problem]

The present disclosure provides a server, method, and system for providing a waste oil transaction matching service for matching waste oil transactions between a provider and a collector in a non-face-to-face manner.

In addition, the present disclosure provides a server, method, and system for managing a storage/discharge status and transaction of waste oil based on a platform.

The problems to be solved by the present disclosure are not limited to the above-mentioned problems, and other problems that are not mentioned may be obviously understood by those skilled in the art from the following description.

### [Technical Solution]

According to one aspect of the present invention, a waste oil management and transaction matching method of a system including a specific waste oil collection device, a server for managing an application controlling the waste oil collection device, and a first terminal device used by a provider registered in the application includes: after information for authenticating the provider is input through the application executed on the first terminal device, based on recognizing a radio-frequency identification (RFID) tag of the specific waste oil collection device by the first terminal device, opening, by the waste oil collection device, a cover of an outlet of the waste oil collection device; measuring, by the specific waste oil collection device, a weight of waste oil supplied by the provider through the outlet of the specific waste oil collection device, and transmitting the measured weight to the server and the first terminal device; identifying, by the server, a specific collector that satisfies a transaction condition corresponding to waste oil sales information registered by the provider among a plurality of pre-registered collectors, and transmitting bid price information of the specific collector to the first terminal device; and transmitting, by the server, a message requesting collection of the waste oil supplied by the provider to a second terminal device used by the specific collector, based on the provider accepting waste oil purchase bid price information of the specific collector, in which the specific waste oil collection device includes a scale device capable of measuring the weight of the waste oil supplied through the outlet and one or more cameras capturing an environment within a certain distance from the specific waste oil collection device.

The waste oil collection device may transmit information on the weight of the waste oil accommodated in the specific waste oil collection device to the server, based on the weight of the waste oil accommodated in the specific waste oil collection device exceeding a threshold value, and the server may provide a message inquiring a waste oil collection schedule to the specific collector through the application to the second terminal device.

Based on that the message that the waste oil is collected after a predefined time period based on a time when the weight of the waste oil accommodated in the specific waste oil collection device exceeds the threshold value is provided through the application from the second terminal device, the server may transmit the message requesting the collection of the waste oil to a third terminal device used by a person in charge of collecting the waste oil.

The server may receive information on a place where the waste oil is collected and stored from the third terminal device, and provide the information on the place to the second terminal device through the application

The transaction condition corresponding to the waste oil sales information registered by the provider may include a condition related to whether the provider is located within a preset distance from a store location of the provider or the waste oil collection device.

The specific waste oil collection device may acquire a plurality of images of an environment within a certain distance from the specific waste oil collection device through the one or more cameras, and detect an inflammable substance within a certain distance from the specific waste oil collection device through the plurality of images.

The specific waste oil collection device may acquire information on a specific substance within a certain distance from the specific waste oil collection device by inputting the plurality of images to a pre-trained artificial intelligence model, and transmitting a warning message related to the specific substance to the server based on the detection of the specific substance as the inflammable substance.

A check valve lid may be coupled to the outlet of the waste oil.

The server may identify the specific waste oil collection device matching the provider among the plurality of waste oil collection devices based on i) a distance between a store location of the provider and the plurality of waste oil collection devices and ii) the difference between the waste oil accommodated in the plurality of waste oil collection devices and the threshold value, and provide information on the identified specific waste oil collection device to the first terminal device through the application.

According to another aspect of the present invention, a system includes: a specific waste oil collection device that accommodates waste oil; a server that manages an application for controlling the specific waste oil collection device; and a first terminal device that is used by a provider registered in the application, in which the waste oil collection device opens a cover of an outlet of the waste oil collection device based on recognizing an RFID tag of the waste oil collection device by the first terminal device after information for authenticating the provider is input through the application executed on the first terminal device, and measures a weight of the waste oil supplied by the provider through the outlet of the waste oil collection device, and transmits the measured weight to the server and the first terminal device, the server identifies a specific collector that satisfies a transaction condition corresponding to waste oil sales information registered by the provider among a plurality of pre-registered collectors and transmits bid price information of the specific collector to the first terminal device, and transmits a message requesting collection of the waste oil supplied by the provider to a second terminal device used by the specific collector, based on the provider accepting waste oil purchase bid price information of the specific collector, and the specific waste oil collection device includes a scale device capable of measuring the weight of the waste oil supplied through the outlet and one or more cameras capturing an environment within a certain distance from the specific waste oil collection device.

### [Advantageous Effects]

According to various embodiments of the present disclosure, it is possible to provide a system, method, and server for providing a waste oil transaction matching service for matching a waste oil transaction between a provider and a collector in a non-face-to-face manner.

In addition, according to various embodiments of the present disclosure, it is possible to provide a server, method, and system for managing a storage/discharge status and transaction of waste oil based on a platform.

In addition, according to various embodiments of the present disclosure, it is possible to generate high profits and minimize environmental pollution by sharing and distributing information and matching a transaction between a provider and a collector according to required circumstances.

In addition, according to various embodiments of the present disclosure, by having a provider transact at the highest price, it is possible to induce/inflow more activities of existing and hidden providers, and a virtuous cycle effect can be expected by creating more business partners for a collector.

In addition, according to the present disclosure, it is possible to provide consulting services to customers by analyzing all contents of customers through big data analysis, which stores customer behavior in the server within the platform, and provides time and economic effects to customers in each channel with a systematic and smart system.

In particular, according to the present disclosure, it is possible to provide environmental, economic, and social effects by reducing land and sewage pollution and reducing sewage treatment costs on a national level.

The effects of the present disclosure are not limited to the above-described effects, and other effects that are not mentioned may be obviously understood by those skilled in the art from the following description.

### [Description of Drawings]

FIG. 1 is a diagram describing a system for providing a waste oil management service and a waste oil transaction matching service according to an embodiment of the present disclosure.
FIG. 2 is a block diagram schematically illustrating a configuration of a server managing an application for controlling a waste oil collection device according to an embodiment of the present disclosure.
FIGS. 3 to 6 are diagrams describing a configuration of a waste oil collection device according to an embodiment of the present disclosure.
FIG. 7 is a diagram describing a method of providing a waste oil management service and a waste oil transaction matching service according to an embodiment of the present disclosure.

### [Modes of the Invention]

Various advantages and features of the present disclosure and methods accomplishing them will become apparent from the following description of embodiments with reference to the accompanying drawings. However, the present disclosure is not limited to embodiments to be described below, but may be implemented in various different forms, these embodiments will be provided only in order to make the present disclosure complete and allow those skilled in the art to completely recognize the scope of the present disclosure, and the present disclosure will be defined by the scope of the claims.

Terms used in the present specification are for explaining embodiments rather than limiting the present disclosure.

Unless otherwise stated, a singular form includes a plural form in the present specification.

Throughout this specification, the term "comprise" and/or "comprising" will be understood to imply the inclusion of stated constituents but not the exclusion of any other constituents.

Like reference numerals refer to like components throughout the specification and "and/or" includes each of the components mentioned and includes all combinations thereof.

Although "first," "second," and the like are used to describe various components, it goes without saying that these components are not limited by these terms. These terms are used only to distinguish one component from other components. Therefore, it goes without saying that the first component mentioned below may be the second component within the technical scope of the present disclosure.

Unless defined otherwise, all terms (including technical and scientific terms) used in the present specification have the same meanings commonly understood by those skilled in the art to which the present disclosure pertains. In addition, terms defined in the commonly used dictionary are not ideally or excessively interpreted unless explicitly defined otherwise.

Spatially relative terms "below", "beneath", "lower", "above", "upper", and the like may be used to easily describe the correlation between one component and other components as illustrated in drawings. The spatially relative terms should be understood as terms including different directions of components during use or operation in addition to the directions illustrated in the drawings.

For example, when components illustrated in the drawings are turned up, a component described as "below" or "beneath" another component may be placed "above" the another component. Therefore, the illustrative term "below" can include both downward and upward directions. The components can also be aligned in different directions, and therefore the spatially relative terms can be interpreted according to the alignment.

Hereinafter, embodiments of the present disclosure will be described in detail with reference to the accompanying drawings.

Prior to the description, the meaning of the terms used in this specification will be briefly described. However, it should be noted that the description of terms is intended to aid understanding of the present specification, and is not used in the sense of limiting the technical spirit of the present disclosure unless explicitly described as limiting the present disclosure.

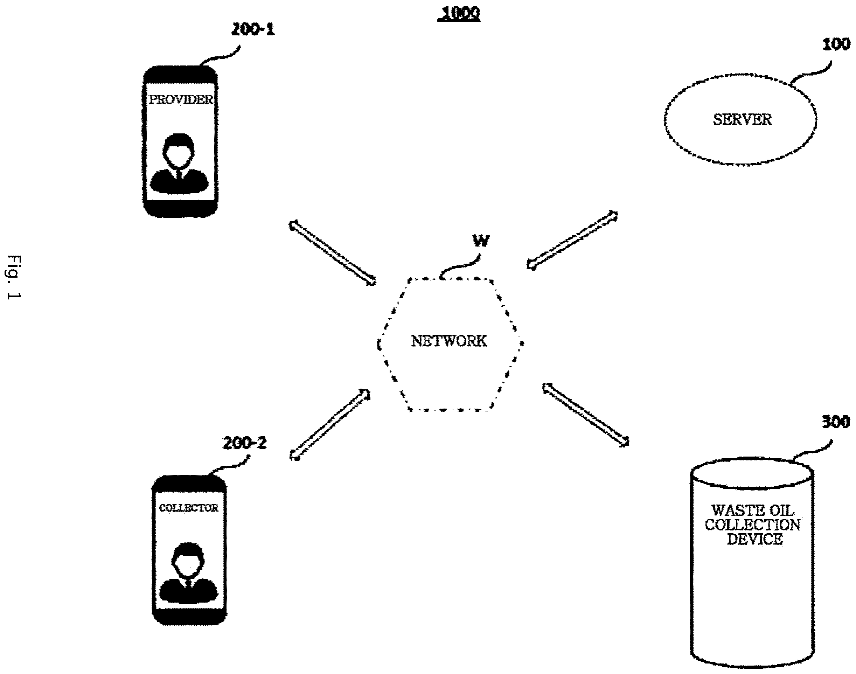

FIG. 1 is a diagram describing a system for providing a waste oil management service and a waste oil transaction matching service according to an embodiment of the present disclosure.

As illustrated in FIG. 1, a system 1000 for implementing a method of providing a waste oil management service and a waste oil transaction matching service includes a server 100, a terminal device 200-1 used by a provider, a terminal device 200-2 used by a collector, and a waste oil collection device 300.

FIG. 1 illustrates a terminal device used by one provider and a collector, respectively, but is not limited thereto.

For example, a provider that sells and supplies waste oil is an emission source including various business offices, homes, government offices, factories, etc. For example, a provider may include restaurant workers who operate chicken, Chinese food, Western food, Korean food, hop bars, etc., where waste oil is generated and sold, and a collector who purchases and collects waste oil may include a collector that collects waste oil, which is only an example, but is not limited thereto.

In addition, the waste oil may include animal oil (i.e., animal fat) and vegetable oil (i.e., vegetable oil), and the animal oil may include chicken oil, lard oil, butter, duck oil, and the like, and the vegetable oil may include cooking oil, corn oil, olive oil, soybean oil, sesame oil, perilla oil, cottonseed oil, cocoa oil, coconut oil, palm oil, and the like.

FIG. 1 illustrates a case where the terminal device 200-1 used by the provider and the terminal device 200-2 used by the collector are implemented as a smart phone, but are not limited thereto. The terminal device 200-1 used by the provider and the terminal device 200-2 used by the collector may include standing devices such as a personal computer (PC), a network TV, a hybrid broadcast broadband TV (HBBTV), a smart TV, and an Internet protocol TV (IPTV), and mobile devices (handheld devices) such as a tablet PC, a notebook, and personal digital assistant (PDA).

The server 100 included in the system 1000, the terminal device 200-1 used by the provider, the terminal device 200-2 used by the collector, and the waste oil collection device 300 may perform communication through a network W.

Here, network W may include a wired network and a wireless network. For example, the network may include various networks such as a local area network (LAN), a metropolitan area network (MAN), and a wide area network (WAN).

These wired/wireless networks include all communication networks currently or to be supported in the future according to standards, and can support all one or more communication protocols for this.

Such wired/wireless networks may include, for example, networks for wired connection such as a universal serial bus (USB), composite video banking sync (CVBS), a component, S-video (analog), a digital visual interface (DVI), a high definition multimedia interface (HDMI), RGB, and D-SUB, and communication standards or protocols for the same, and networks for wireless connection such as Bluetooth, radio frequency identification (RFID), infrared data association (IrDA), ultra-wideband (UWB), ZigBee, digital living network alliance (DLNA), a wireless LAN (WLAN) (Wi-Fi), wireless broadband (Wibro), world interoperability for microwave access (Wimax), high-speed downlink packet access (HSDPA), long term evolution/LTE-advanced (LTE/LTE-A), and Wi-Fi direct and communication standards or protocols for the same.

The server 100 may generate/manage/control an application (i.e., a waste oil collection device management and waste oil collection transaction management platform) capable of managing/controlling a waste oil collection device and a waste oil collection transaction. The terminal devices used by a plurality of providers/collectors may install applications created/managed/controlled by the server 100, and the plurality of providers/collectors register themselves (to use services provided by the applications) on the installed applications.

Specifically, the application provided by the server 100 may provide a UI for checking service subscription authentication when a provider/collector logs in, and a main screen UI for managing/controlling waste oil collection transactions.

The server 100 may receive provider information and collector information from the terminal device 200-1 used by the provider and the terminal device 200-2 used by the collector through the main screen UI. Also, the server 100 may construct a database based on the received provider information and collector information.

Here, the provider information may include a company name, a business registration number of a business operated by a provider, a type of business, a branch name, a location (i.e., store location), contact information, and a detailed profile of a provider. Here, the provider information may include a company name, a business registration number of a business operated by a provider, a type of business, a branch name, a location (i.e., store location), contact information, and a detailed profile of a provider.

A method of providing a waste oil management service and a waste oil transaction matching service based on the database and application constructed by the server 100 will be described in detail with reference to the drawings to be described later.

The waste oil collection device 300 is a device capable of collecting and storing/accommodating waste oil. Here, as described above, the waste oil may include animal oil (i.e., animal fat) and vegetable oil (i.e., vegetable oil), and the animal oil may include chicken oil, lard oil, butter, duck oil, and the like, and the vegetable oil may include cooking oil, corn oil, olive oil, soybean oil, sesame oil, perilla oil, cottonseed oil, cocoa oil, coconut oil, palm oil, and the like.

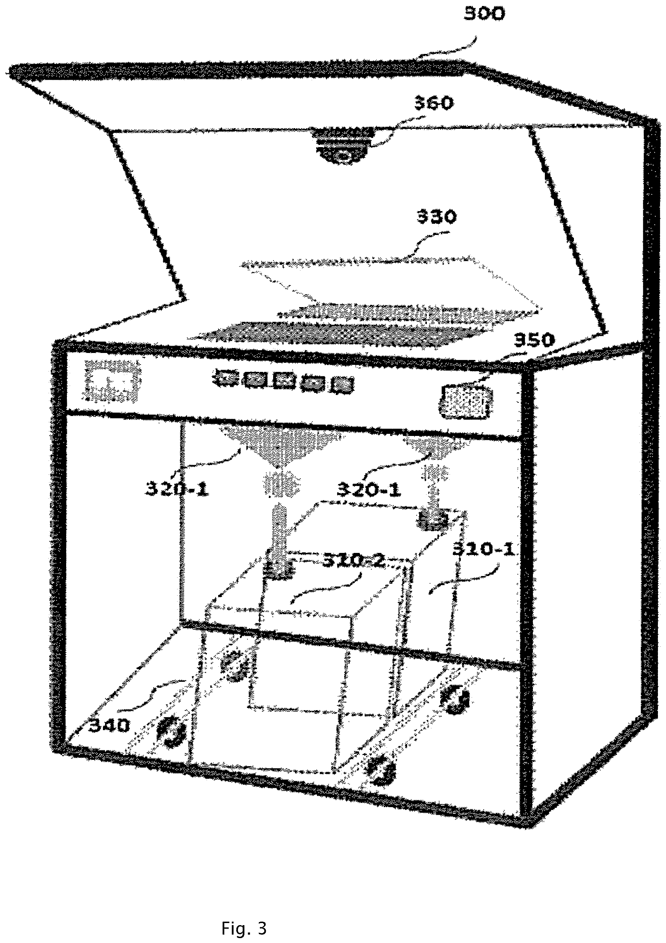

The information on waste oil supplied to the waste oil collection device 200 and the provider supplying the corresponding waste oil may be uploaded onto an application controlled by the server 100. That is, the information related to the waste oil collection device 200 may be linked to an application. The configuration of the waste oil collection device will be described in detail with reference to FIGS. 3 to 6.

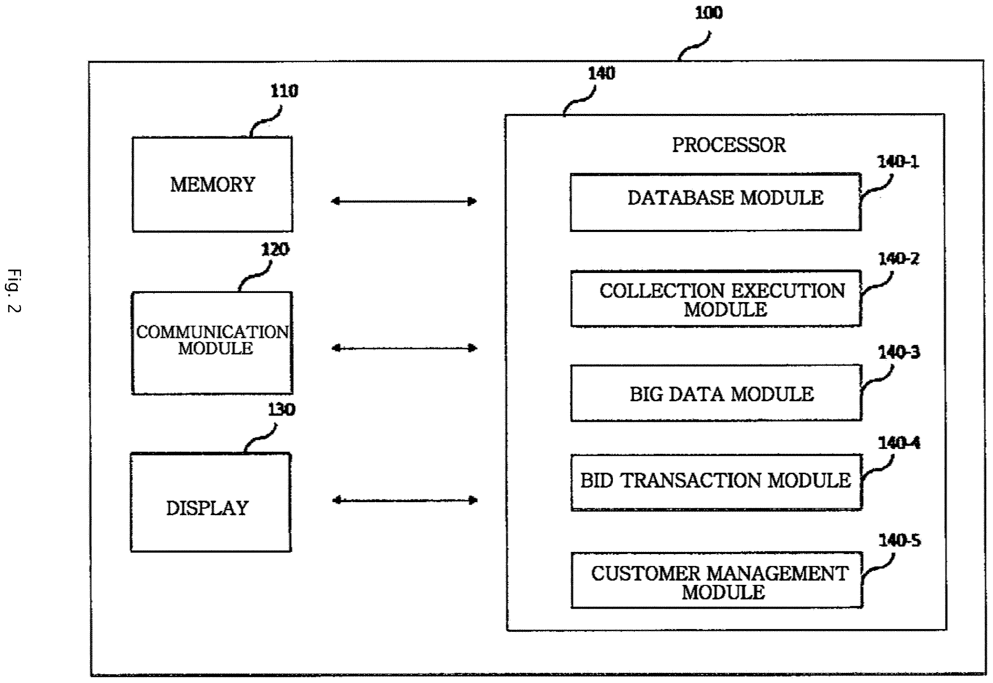

FIG. 2 is a block diagram schematically illustrating a configuration of a server managing an application for controlling a waste oil collection device according to an embodiment of the present disclosure.

As illustrated in FIG. 2, the server 100 may include a memory 110, a communication interface 120, a display 130, and a processor 140.

However, the configuration illustrated in FIG. 2 is an exemplary diagram for implementing the embodiments of the present disclosure, and appropriate hardware and software configurations that are obvious to those skilled in the art may be additionally included in the server 100.

The memory 110 may store one or more instructions for the processor 140 to perform various operations. The memory 110 may store data supporting various functions of the server 100 and programs for operating the processor 140, and may store input/output data (e.g., database based on a plurality of provider/collector information, waste oil sales information registered by the provider, etc.).

The memory 110 may include at least one storage medium of a flash memory type, a hard disk type, a solid state disk type (SSD type), a silicon disk drive type (SDD type), a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

The communication module 120 may include one or more components including a circuit enabling communication with an external device (e.g., a plurality of waste oil collection devices, a terminal device used by a plurality of collectors/providers, etc.). For example, the communication module 120 may include at least one broadcast reception module, a wired communication module, a wireless communication module, a short-distance communication module, and a location information module.

The display 130 displays (outputs) information (e.g., various data or the like uploaded on an application) processed by the server 100. For example, the display 130 may display execution screen information of an application program/application driven by the server 100, or user interface (UI) or graphic user interface (GUI) information according to the execution screen information.

The processor 140 may perform a method of managing an application that controls a waste oil collection device by executing one or more instructions stored in the memory 110. That is, the processor 140 may control overall operations and functions using each component of the server 100.

Specifically, the processor 140 includes a memory for storing an algorithm for controlling the operation of components in the server 100 or data for program reproducing the algorithm, and at least one processor (not illustrated) for performing the above-described operation using the data stored in the memory. In this case, the memory and the processor may each be implemented as separate chips. Alternatively, the memory and the processor may be implemented as a single chip.

The processor 140 may include a database module 140-1, a collection execution module 140-2, a big data analysis module 140-3, a bid transaction module 140-4, and a customer management module 140-5.

Here, the database module 140-1 may construct a database based on the provider information and/or collector information received from the terminal device used by a provider and/or the terminal device used by the collector.

The collection execution module 140-2 may receive waste oil sales information and a collection request from the provider from the terminal device used by the provider. For example, the waste oil sales information of the provider may include, but is not limited to, waste oil sales volume, desired sales amount, desired collection date, sales-related notes, etc.

The big data analysis module 140-3 may extract collector information satisfying a transaction condition corresponding to the waste oil sales information and transmit provider information and its waste oil sales information to a terminal device used by the corresponding collector.

When receiving the waste oil purchase bid price information of the collector from the terminal device used by the collector, the bid transaction module 140-4 may transmit the collector information and its waste oil purchase bid price information to the terminal device used by the provider presenting the waste oil sales information.

The bid transaction module 140-4 may transmit a waste oil collection request to the terminal device used by the collector corresponding to the selected waste oil purchase bid price information when the waste oil purchase bid information is selected by the terminal device used by the provider.

The customer management module 140-5 may receive and store service ratings and reviews written by a collector from the terminal device used by the provider when the completion of waste oil collection and completion of a waste oil purchase price is confirmed from the terminal device used by the collector.

FIGS. 3 to 6 are diagrams for describing a configuration of a waste oil collection device according to an embodiment of the present disclosure.

The waste oil collection device 300 may include one or more waste oil bins 310-1 and 310-2 capable of accommodating/storing waste oil. FIG. 3 illustrates a case where two waste oil bins 310-1 and 310-2 are stored in the waste oil collection device 300, but the number of waste oil bins may be one, three, or more, and may be practically unlimited.

The waste oil bins 310-1 and 310-2 may be connected to outlets 320-1 and 320-2. That is, the provider supplies waste oil to the outlets 320-1 and 320-2, and the supplied waste oil may be stored in the waste oil bins 310-1 and 310-2 through a hose connected to outlets 320-1 and 320-2. The outlets 320-1 and 320-2 may be covered by a cover 330, and the cover may be automatically opened or closed by the waste oil collection device 300.

A check valve lid may be coupled to the outlets 320-1 and 320-2. Accordingly, a black flow that may occur when supplying the waste oil through the outlets 320-1 and 320-2 may be prevented.

The waste oil collection device 300 may include a scale device 340 capable of measuring the weight of the waste oil supplied through the outlet. The scale device 340 may measure the weights of the waste oil bins 310-1 and 310-2. The waste oil collection device 300 may acquire the weight of the waste oil by subtracting the weights of the waste oil bins 310-1 and 310-2 themselves from the total weights of the waste oil bins 310-1 and 310-2.

The scale device 340 may be configured in the form of a wagon supporting the waste oil bins 310-1 and 310-2. Accordingly, the wagon supporting the waste oil bins 310-1 and 310-2 from the waste oil collection device 300 may be easily detached, and accordingly, the waste oil bins 310-1 and 310-2 may be easily replaced.

The waste oil collection device 300 may transmit the acquired weight of the waste oil to the server and/or the terminal device of the provider supplying the waste oil. That is, the waste oil collection device 300 may include one or more memories, processors, and communication modules. An example of one or more memories, processors, and communication modules has been described with reference to FIG. 2, and therefore, duplicate descriptions thereof will be omitted.

A radio-frequency identification (RFID) tag 350 may be included on the waste oil collection device 300. The RFID tag 350 may include unique information capable of identifying whether the waste oil collection device 300 may be used. After the information for authenticating the provider is input on an application executed by the terminal device used by the provider, when the terminal device used by the provider recognizes the RFID tag, the waste oil collection device 300 may open the cover 330.

That is, when recognizing the RFID tag after authenticating that the first terminal device is a terminal device used by a provider registered on an application, the waste oil collection device 300 may open the cover 330.

The waste oil collection device 300 may include one or more cameras 360 that capture an environment within a certain distance from a specific waste oil collection device. For example, the specific waste oil collection device 300 may acquire a plurality of images of an environment within a certain distance from the specific waste oil collection device through one or more cameras.

For example, the specific waste oil collection device 300 may detect an inflammable substance within a certain distance from the specific waste oil collection device 300 through a plurality of images.

Specifically, the specific waste oil collection device 300 may acquire information on a specific substance within a certain distance from the specific waste oil collection device 300 by inputting the plurality of images to a pre-trained artificial intelligence model.

Here, the artificial intelligence model may be a deep neural network. Throughout this specification, a neural network and a network function may be used as the same meaning. A deep neural network (DNN) may refer to a neural network including a plurality of hidden layers in addition to an input layer and an output layer. It is possible to identify latent structures of data by using the deep neural network. That is, it is possible to identify the latent structures (e.g., what objects are in the photo, what the content and emotion of the text are, what the content and emotion of the audio are, etc.) of a photo, text, video, sound, or music. The deep neural network may include a convolutional neural network (CNN), a recurrent neural network (RNN), a restricted Boltzmann machine (RBM), a deep belief network (DBN), a Q network, a U network, a Siamese network, and the like.

An artificial intelligence model may be trained to classify substances present on an input image. For example, the artificial intelligence model may be trained to classify a plurality of substances included in an input image into waste oil (e.g., residual waste oil spilled while supplying to the waste oil collection device 300), an inflammable substance, etc.

The specific waste oil collection device 300 may detect whether the inflammable substance exists within a certain distance of the specific waste oil collection device 300 through the information on the specific substance acquired through the artificial intelligence model.

Based on the specific substance being detected as an inflammable substance through the artificial intelligence model, the specific waste oil collection device 300 may transmit a warning message related to the specific substance to the server.

Additionally or alternatively, the specific waste oil collection device 300 may periodically transmit the image acquired through one or more cameras 360 to the server. The server may determine whether the inflammable substance exists within a certain distance of the specific waste oil collection device 300 by periodically inputting the received image into the artificial intelligence model.

Based on the determination that the inflammable substance exists within a certain distance of the specific waste oil collection device 300, the server 100 may transmit an inflammable substance detection message to a terminal device used by a person in charge of managing the specific waste oil collection device 300.

Accordingly, the inflammable substance within the specific waste oil collection device 300 or on the specific waste oil collection device 300 and/or within a certain distance of the specific waste oil collection device 300 may be removed.

A certain distance when it is determined that the inflammable substance exists within the certain distance of the specific waste oil collection device 300 may be the same as or different from a certain distance when the waste oil collection device 300 may acquire the information on the provider from the first terminal device and/or server that is a certain distance away from the RFID tag.

FIG. 3 is a diagram illustrating the front and side surfaces of the waste oil collection device 300.

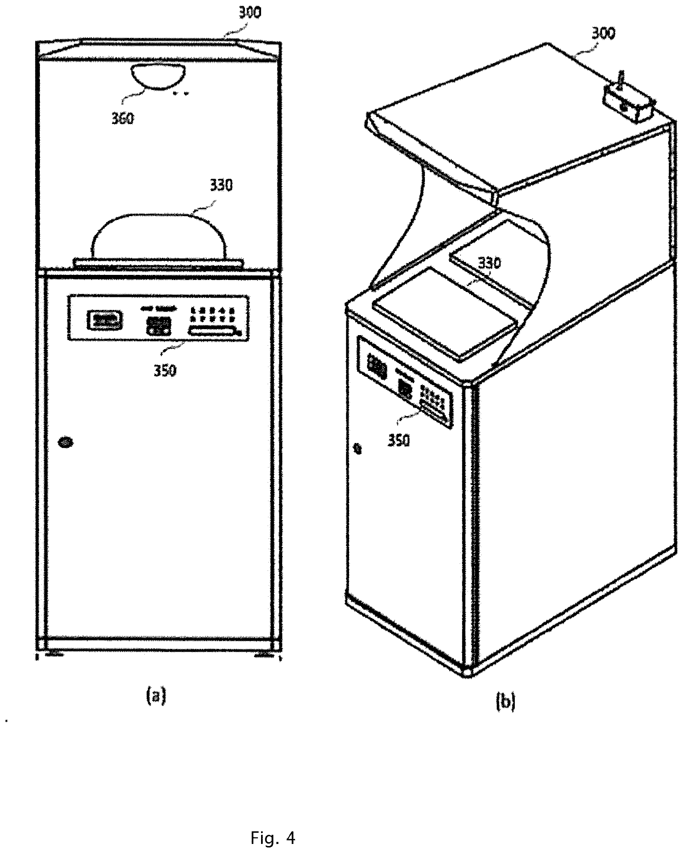

FIG. 4A illustrates the front surface of the waste oil collection device 300, and FIG. 4B illustrates the side surface of the waste oil collection device 300.

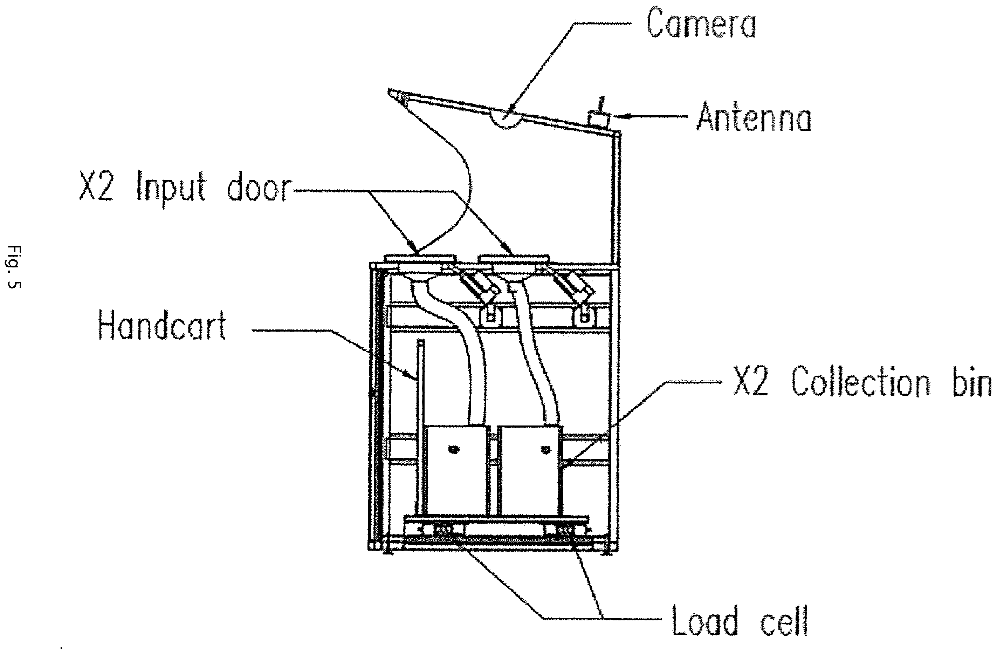

FIG. 5 is an example of a side perspective view of the waste oil collection device 300.

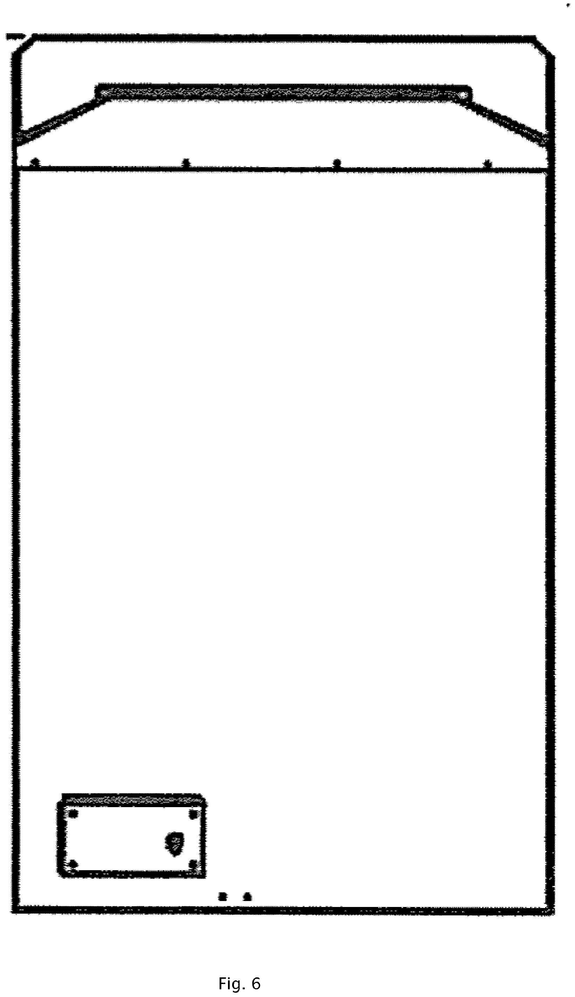

FIG. 6 is an example of a view of the waste oil collection device 300 viewed from above.

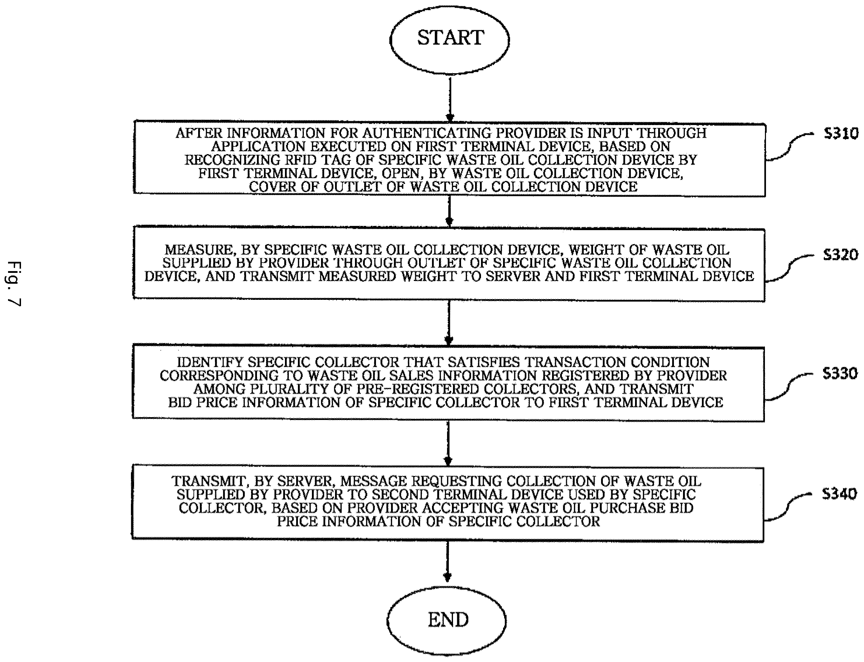

FIG. 7 is a diagram describing a method of providing a waste oil management service and a waste oil transaction matching service according to an embodiment of the present disclosure.

Based on the recognition of the RFID tag of the specific waste oil collection device by the first terminal device after the information for authenticating the provider is input through the application executed on the first terminal device, the waste oil device may open the cover of the outlet (S410).

First, the server may identify the specific waste oil collection device (i.e., a waste oil collection device optimized for the provider) that matches the provider based on the provider information (e.g., store location of the provider, etc.) and information related to the plurality of waste oil collection devices.

Specifically, the server may identify the specific waste oil collection device matching the provider among the plurality of waste oil collection devices based on i) the distance between a store location of the provider and the plurality of waste oil collection devices and ii) the difference between the waste oil accommodated in the plurality of waste oil collection devices and the (predefined) threshold value.

For example, the server may increase a weight of the corresponding waste oil collection device as the distance value between the store location of the provider and the waste oil collection device decreases. The server may increase the weight for the corresponding waste oil device as the difference between the waste oil accommodated in the waste oil collection device and the (predefined) threshold value increases.

That is, the server may identify the specific waste oil collection device that is close to the provider and accommodates a small amount of waste oil among the plurality of waste oil collection devices.

The server may provide the information on the identified specific waste oil collection device to the first terminal device through the application. The provider may recognize the specific waste oil collection device and input information (e.g., password, biometric information of the provider, etc.) for authenticating the provider through the application executed on the first terminal device.

Based on the authentication of the provider on the application, the first terminal device may recognize the RFID tag of the specific waste oil collection device. For example, when the provider is recognized on the application, the first terminal device may display an application UI screen capable of recognizing the RFID tag of the specific waste oil collection device or activate a communication module capable of recognizing the corresponding RFID tag.

Based on the RFID tag being recognized by the first terminal device, the waste oil collection device may open the cover of the outlet of the waste oil collection device. In this case, the waste oil collection device may acquire the information on the first terminal device recognizing the RFID tag and the provider using the first terminal device through the RFID tag.

Additionally or alternatively, the waste oil collection device may acquire the information on the provider from the first terminal device and/or the server that is a certain distance away from the RFID tag.

The specific waste oil collection device may measure the weight of waste oil supplied by the provider through the outlet of the specific waste oil collection device and transmit the measured weight to the server and the first terminal device (S320).

The specific waste oil collection device may measure the weight of the waste oil supplied by the provider via the scale device (in the form of the wagon). The specific waste oil collection device may transmit the weight of waste oil supplied to the server and/or the first terminal device through the application.

According to an embodiment of the present disclosure, the waste oil collection device may transmit the information on the weight of the waste oil accommodated in the specific waste oil collection device to the server, based on the weight of the waste oil accommodated in the specific waste oil collection device exceeding the threshold value.

The server may identify a specific collector that satisfies a transaction condition corresponding to the waste oil sales information registered by the provider among the plurality of pre-registered collectors and transmit the bid price information of the specific collector to the first terminal device (S330).Specifically, the server may receive the waste oil sales information from the first terminal device. In this case, the waste oil sales information may include, but is not limited to, waste oil sales volume, desired sales amount, desired collection date, sales-related notes, etc.

The transaction condition corresponding to the waste oil sales information registered by the provider may include i) a first transaction condition related to whether the provider is located within a preset distance from the store location of the provider or the waste oil collection device, ii) a second transaction condition related to whether the service rating of the collector is equal to or greater than a predetermined reference value, and iii) a third transaction condition related to the highest bid price for purchasing waste oil.

As an example, the collector information satisfying the first transaction condition may include specific collector information satisfying the first transaction condition calculated by a formula composed of |P_{provider} - P_{collector}| < TEST₁ (where P_{provider} is the location of the provider, P_{collector} is the location of the collector, and TEST₁ is a predetermined set distance).

The collector information that satisfies the second transaction condition may include the specific collector information satisfying the second transaction condition calculated by a formula composed of Q_{collector}/Q_{average} > TEST₂ (where Q is a service rating, Q_{collector} is a rating of a specific collector, Q_{average} is an average rating, and TEST₂ is a predetermined reference value).

The collector information that satisfies the third transaction condition may include the specific collector information that satisfies the third transaction condition that presents the highest bid price for purchasing waste oil.

When there is the collector information that satisfies all of the first, second, and third transaction conditions among the plurality of pre-registered collectors, the server may transmit the collector information that satisfies all of the first, second, and third transaction conditions to the first terminal device.

Additionally or alternatively, the provider may determine the priority of the first, second, and third transaction conditions.

When there is no collector among the plurality of collectors that satisfies all of the first, second, and third transaction conditions, the server may transmit the information on the collector that satisfies the transaction condition having a higher priority among the plurality of collectors to the first terminal device.

When there are the plurality of collectors that satisfy the transaction condition with high priority, the server may transmit the information on the collector more satisfying the corresponding transaction condition among the plurality of corresponding collectors to the first terminal device.

As an example, it is assumed that the priority of the first transaction condition is set to be the highest and there are the plurality of collectors satisfying the first transaction condition. The server may transmit information on a collector closest to the store location of the provider among the plurality of collectors to the first terminal device.

The server may transmit a message requesting the collection of the waste oil supplied by the provider to the second terminal device used by the specific collector, based on the provider accepting the waste oil purchase bid price information of the specific collector (S440).

The specific collector may pay the waste oil purchase bid price on the application. The server may provide the provider with the remaining amount minus a predefined rate of fee (e.g., application fee) from the paid waste oil purchase bid price.

Additionally or alternatively, it is assumed that the waste oil collection device may transmit the information on the weight of the waste oil accommodated in the specific waste oil collection device to the server, based on the weight of the waste oil accommodated in the specific waste oil collection device exceeding the threshold value. In this case, the server may provide the second terminal device with a message requesting a waste oil collection schedule to the specific collector through the application.

Based on that the message that the waste oil is collected after a predefined time period based on a time when the weight of the waste oil accommodated in the specific waste oil collection device exceeds the threshold value is provided through the application from the second terminal device, the server may transmit the message requesting the collection of the waste oil to the third terminal device used by a person in charge of collecting the waste oil.

For example, in order to more efficiently use the specific waste oil collection device, when the specific collector does not collect waste oil from the day when the waste oil capacity exceeds the threshold value to a predefined time period, the person in charge of collecting the waste oil may collect the waste oil on the specific waste oil collection device.

The server may receive the information on the place where the waste oil is collected and stored from the third terminal device used by the person in charge of collecting the waste oil, and provide the information on the place where the waste oil is collected to the second terminal device through the application. Accordingly, the specific collector may collect the purchased waste oil from the place where the waste oil is collected.

The method according to the embodiment of the present disclosure described above may be embodied as a program (or application) and stored in a medium for execution in combination with a server which is hardware.

In order for the computer to read the program and execute the methods implemented as the program, the program may include a code coded in a computer language such as C, C++, JAVA, or machine language that the processor (CPU) of the computer may read through a device interface of the computer. Such code may include functional code related to a function or such defining functions necessary for executing the methods and include an execution procedure-related control code necessary for the processor of the computer to execute the functions according to a predetermined procedure. In addition, the code may further include a memory reference related code for which location (address street number) in an internal or external memory of the computer the additional information or media necessary for the processor of the computer to execute the functions is to be referenced at.

In addition, when the processor of the computer needs to communicate with any other computers, servers, or the like located remotely in order to execute the above functions, the code may further include a communication-related code for how to communicate with any other computers, servers, or the like using the communication module of the computer, what information or media to transmit/receive during communication, and the like.

The storage medium is not a medium that stores images therein for a while, such as a register, a cache, a memory, or the like, but means a medium that semi-permanently stores the images therein and is readable by an apparatus.

Specifically, examples of the storage medium include, but are not limited to, ROM, random-access memory (RAM), CD-ROM, a magnetic tape, a floppy disk, an optical image storage device, and the like.

That is, the program may be stored in various recording media on various servers accessible by the computer or in various recording media on the computer of the user.

In addition, media may be distributed in a computer system connected by a network, and a computer-readable code may be stored in a distributed manner.

Operations of the method or algorithm described with reference to the embodiment of the present disclosure may be directly implemented in hardware, in software modules executed by hardware, or in a combination thereof.

The software module may reside in a random access memory (RAM), a read-only memory (ROM), an erasable programmable ROM (EPROM), an electrically erasable programmable ROM (EEPROM), a flash memory, a hard disk, a removable disk, a compact disc read-only memory (CD-ROM), or in any form of computer-readable recording medium known in the art to which the disclosure pertains.

Although exemplary embodiments of the present disclosure have been described with reference to the accompanying drawings, those skilled in the art to which the present disclosure belongs will appreciate that various modifications and alterations may be made without departing from the spirit or essential feature of the present disclosure. Therefore, it is to be understood that exemplary embodiments described hereinabove are illustrative rather than restrictive in all aspects.

### [Detailed Description of Main Elements]

1000: System
W: Network
100: Server
110: Memory
120: Communication module
130: Display
140: Processor
140-1: Database module
140-2: Collection collection execution module(140-2)
140-3: Big data analysis module)
140-4: Bid transaction module
140-5: Customer management module
200-1: Terminal device used by a provider
200-2: Terminal device used by a collector
300: Waste oil collection device
310-1, 310-2: Waste oil bin
320-1, 320-2: Outlet
330: Cover
340: Scale device
350: RFID tag
360: Camera

## Claims

1. A waste oil management and transaction matching method of a system including a specific waste oil collection device, a server for managing an application controlling the waste oil collection device, and a first terminal device used by a provider registered in the application, the method comprising:
after information for authenticating the provider is input through the application executed on the first terminal device, based on recognizing a radio-frequency identification (RFID) tag of the specific waste oil collection device by the first terminal device, opening, by the waste oil collection device, a cover of an outlet of the waste oil collection device;
measuring, by the specific waste oil collection device, a weight of waste oil supplied by the provider through the outlet of the specific waste oil collection device, and transmitting the measured weight to the server and the first terminal device;
identifying, by the server, a specific collector that satisfies a transaction condition corresponding to waste oil sales information registered by the provider among a plurality of pre-registered collectors, and transmitting bid price information of the specific collector to the first terminal device; and
transmitting, by the server, a message requesting collection of the waste oil supplied by the provider to a second terminal device used by the specific collector, based on the provider accepting waste oil purchase bid price information of the specific collector,
wherein the specific waste oil collection device includes a scale device capable of measuring the weight of the waste oil supplied through the outlet and one or more cameras capturing an environment within a certain distance from the specific waste oil collection device.

2. The waste oil management and transaction matching method of claim 1, wherein the waste oil collection device transmits information on the weight of the waste oil accommodated in the specific waste oil collection device to the server, based on the weight of the waste oil accommodated in the specific waste oil collection device exceeding a threshold value, and
the server provides a message inquiring about a waste oil collection schedule to the specific collector through the application to the second terminal device.

3. The waste oil management and transaction matching method of claim 2, wherein, based on that the message that the waste oil is collected after a predefined time period based on a time when the weight of the waste oil accommodated in the specific waste oil collection device exceeds the threshold value is provided through the application from the second terminal device, the server transmits the message requesting the collection of the waste oil to a third terminal device used by a person in charge of collecting the waste oil.

4. The waste oil management and transaction matching method of claim 3, wherein the server receives information on a place where the waste oil is collected and stored from the third terminal device, and
provides the information on the place to the second terminal device through the application

5. The waste oil management and transaction matching method of claim 1, wherein the transaction condition corresponding to the waste oil sales information registered by the provider includes a condition related to whether the provider is located within a preset distance from a store location of the provider or the waste oil collection device.

6. The waste oil management and transaction matching method of claim 1, wherein the specific waste oil collection device acquires a plurality of images of an environment within a certain distance from the specific waste oil collection device through the one or more cameras, and
detects an inflammable substance within a certain distance from the specific waste oil collection device through the plurality of images.

7. The waste oil management and transaction matching method of claim 6, wherein the specific waste oil collection device acquires information on a specific substance within a certain distance from the specific waste oil collection device by inputting the plurality of images to a pre-trained artificial intelligence model, and
transmits a warning message related to the specific substance to the server based on the detection of the specific substance as the inflammable substance.

8. The waste oil management and transaction matching method of claim 1, wherein a check valve lid is coupled on the outlet of the waste oil.

9. The waste oil management and transaction matching method of claim 1, wherein the server identifies the specific waste oil collection device matching the provider among the plurality of waste oil collection devices based on i) a distance between a store location of the provider and the plurality of waste oil collection devices and ii) the difference between the waste oil accommodated in the plurality of waste oil collection devices and the threshold value, and
provides information on the identified specific waste oil collection device to the first terminal device through the application.

10. A system, comprising:
a specific waste oil collection device that accommodates waste oil;
a server that manages an application for controlling the specific waste oil collection device; and
a first terminal device that is used by a provider registered in the application,
wherein the waste oil collection device opens a cover of an outlet of the waste oil collection device based on recognizing an RFID tag of the waste oil collection device by the first terminal device after information for authenticating the provider is input through the application executed on the first terminal device, and
measures a weight of the waste oil supplied by the provider through the outlet of the waste oil collection device, and transmits the measured weight to the server and the first terminal device,
the server identifies a specific collector that satisfies a transaction condition corresponding to waste oil sales information registered by the provider among a plurality of pre-registered collectors and transmits bid price information of the specific collector to the first terminal device, and
transmits a message requesting collection of the waste oil supplied by the provider to a second terminal device used by the specific collector, based on the provider accepting waste oil purchase bid price information of the specific collector, and
the specific waste oil collection device includes a scale device capable of measuring the weight of the waste oil supplied through the outlet and one or more cameras capturing an environment within a certain distance from the specific waste oil collection device.
